# EUROPEAN PATENT APPLICATION

(11) **EP 1 944 740 A1**
(43) Date of publication of application: **16.07.2008**
(21) Application number: 06797939.3
(22) Date of filing: 13.09.2006
(51) Int. Cl.: G09B 29/00, G01C 21/00, G06T 17/50, G09B 29/10

(54) **NAVIGATION DEVICE, NAVIGATION METHOD, AND VEHICLE**

(30) Priority: 29.09.2005 JP 2005283647
(71) Applicant: MATSUSHITA ELECTRIC INDUSTRIAL CO., LTD., Osaka 571-8501 (JP)
(72) Inventor: KUDOH, Takahiro c/o Matsushita Electric Ind. Co., Ltd., 2-1-61 Shiromi, Chuo-ku Osaka-shi 540-6207 (JP); KINDO, Tsuyoshi c/o Matsushita Electric Ind. Co., Ltd., 2-1-61 Shiromi, Chuo-ku Osaka-shi 540-6207 (JP); AKITA, Takashi c/o Matsushita Electric Ind. Co., Ltd., 2-1-61 Shiromi, Chuo-ku Osaka-shi 540-6207 (JP)
(74) Representative: Pautex Schneider, Nicole Véronique
(86) International application number: PCT/JP2006/318189
(87) International publication number: WO 2007/037126

(57) **Abstract**

A navigation device is provided, which at a junction such as an intersection point, and the like, offers to a driver an appropriate image of the vicinity of the junction which is required in turning right or left, and the like.

A route search section (102) searches for a route leading to a set destination. An imaging regulation setting section (107) determines an imaging regulation of an imaging section (109) at a junction which exists on the searched route. A distance calculation section (104) calculates a distance between a position of a vehicle and the junction. A control section (108) changes an image to be shown in an output device according to the calculated distance based on the determined imaging regulation.

## Description

### TECHNICAL FIELD

The present invention relates to a navigation device, a navigation method, and a vehicle, and more particularly to a navigation device, a navigation method, and a vehicle which show an image taken by an imaging device such as an in-vehicle camera and the like to a driver for assisting travel of the vehicle.

### BACKGROUND ART

Conventionally, there is widely known a navigation device which is installed in a vehicle, shows a traveling direction to a driver through a display, and performs route navigation. In such a navigation device, map information is stored in advance in an HDD or a DVD (Digital Versatile Disk). The map information includes CG (Computer Graphics) data concerning road information and a junction such as an intersection point, and the like. When the navigation device detects that the vehicle approaches a junction, the navigation device superimposes and draws an arrow indicating a navigation route (a traveling direction) with respect to the CG data concerning the junction for notifying the driver of a course to advance. The CG data concerning the junction is extremely high definition data, and includes data similar to an actual view. However, the CG data is different from a view which is viewed by the driver in various points, for example, a vehicle present ahead of the own vehicle and a facility newly built are actually not drawn. Thus, an extra load occurs for the driver to recognize which position in the actual view a course drawn in the CG data corresponds to. With respect to such a problem, there is disclosed a technique in which a camera is installed at the front of a vehicle for taking an image of an anterior view at a constant imaging magnification, and when it is detected that the vehicle approaches a branch intersection point within a predetermined distance, a navigation arrow with a size according to a distance is superimposed and displayed on the image as the vehicle approaches the intersection point afterwards (e.g. Patent Document 1). According to this, a view which is viewed by a driver corresponds to the image indicating a navigation route, thereby reducing the driver's load for recognition.
Patent Document 1: Japanese Laid-Open Patent Publication No. 2000-155895

### DISCLOSURE OF THE INVENTION

### PROBLEMS TO BE SOLVED BY THE INVENTION

However, since the imaging magnification and an imaging direction are fixed in the technique disclosed in the Patent Document 1, it is hard to show an appropriate image to the driver either at a point (referred to as a distant point) which is distant from the intersection point for a predetermined distance, or at a point (referred to as a near point) near the intersection point. In other words, although the imaging magnification needs to be increased at the distant point for showing a detailed view near the intersection point, only an image of a small area is taken with such a high magnification at the near point, and a clear image cannot be shown to the driver. On the other hand, although the imaging magnification needs to be decreased at the near point for showing an appropriate image near the intersection point, it is hard for the driver to confirm a traveling direction at the intersection point with such a low magnification at the distant point.

Information required for the driver in turning right or left, or the like is considered different depending on a distance to the intersection point. In other words, at the distant point, since the driver requires clue information for turning right or left (such as "turning left at a bank at a corner of the intersection point", and the like), a taken image of the centerof the intersection point is desired to be shown. At the near point, however, in addition to the clue information, since a situation after making right turn or left turn (presence of an obstacle such as a pedestrian, and the like on a road after making left turn) has to be confirmed, a taken image of the intersection point in a direction to turn right or left as well as the taken image of the center of the intersection point need to be shown.

Thus, an object of the present invention is to provide a navigation device which at a junction such as an intersection point, and the like, offers to a driver an appropriate image of the vicinity of the junction which is required in turning right or left, and the like.

### SOLUTION TO THE PROBLEMS

To achieve the above object, the present invention has the following aspects.

A first aspect is a navigation device which is installed in a vehicle for displaying on a screen an image which is taken by imaging means for taking an image of an area ahead of the vehicle, the navigation device comprising: route search means for searching for a route leading to a destination which is set by a user; junction information obtaining means for obtaining position information of a junction on the searched route; position information detection means for obtaining a current position of the vehicle; distance calculation means for calculating a distance from the current position of the vehicle to a position of the junction; and control means for changing a display magnification for an image to be displayed on the screen according to the calculated distance. It is noted that the term "image" includes a moving image and a static image. Also, changing a display magnification for an image to be displayed on the screen includes changing the display magnification for the image to be displayed on the screen by adjusting an imaging magnification of the imaging means in addition to changing the display magnification by enlarging an image taken by the imaging means, or the like.

In a second aspect according to the first aspect, the control means changes the display magnification by enlarging at least a region of an image taken by the imaging means to a predetermined display size according to the calculated distance.

In a third aspect according to the second aspect, the control means increases a size of the region to be enlarged as the calculated distance is shortened, and changes the display magnification by enlarging the region to the predetermined display size.

In a fourth aspect according to the second aspect, the control means further moves a position of the region to be enlarged which is set with respect to the image taken by the imaging means in a direction corresponding to a branch direction of the vehicle at the junction, and changes the displaymagnificationby enlarging the region to the predetermined display size.

In a fifth aspect according to the fourth aspect, the control means changes a displacement amount of the position of the region to be enlarged which is set with respect to the image taken by the imaging means according to the calculated distance.

In a sixth aspect according to the second aspect, the navigation device further comprises imaging regulation setting means for setting an imaging regulation of the imaging means, which includes at least a regulation for timing of a start and a termination of imaging for each junction and a regulation for a size of the region to be enlarged at a time of the start of imaging for each j unction; and road width information obtaining means for obtaining a width of a road at the junction, and the control means determines a size of the region to be enlarged at the time of the start of imaging based on a road width at each junction and the imaging regulation for each junction.

In a seventh aspect according to the first aspect, the control means changes the display magnification for the image to be displayed on the screen by changing an imaging magnification of the imaging means according to the calculated distance.

In an eighth aspect according to the seventh aspect, the control means changes the display magnification by decreasing the imaging magnification of the imaging means as the calculated distance is shortened.

In a ninth aspect according to the seventh aspect, the control means further changes an imaging direction of the imaging means to a branch direction of the vehicle at the junction, and changes the imaging magnification.

In a tenth aspect according to the ninth aspect, the control means changes an angle, based on which the imaging direction of the imaging means is changed, according to the calculated distance.

In an eleventh aspect according to the seventh aspect, the navigation device further comprises imaging regulation setting means for setting an imaging regulation of the imaging means, which includes at least a regulation for timing of a start and a termination of imaging for each junction and a regulation for an imaging magnification of the imaging means at a time of the start of imaging for each junction; and road width information obtaining means for obtaining a width of a road at the junction, and the control means sets the imaging magnification at the time of the start of imaging based on a road width at each junction and the imaging regulation for each junction.

In a twelfth aspect according to the seventh aspect, the navigation device further comprises recognition means for detecting a person by performing image recognition with respect to the image taken by the imaging means, and the control means changes the imaging magnification after changing an imaging direction of the imaging means according to a position of the detected person.

In a thirteenth aspect according to the first aspect, the navigation device further comprises virtual viewpoint conversion means for performing viewpoint conversion from an image for which the display magnification is changed into an image which is viewed from a virtual viewpoint.

In a fourteenth aspect according to the thirteenth aspect, the virtual viewpoint conversion means relatively increases a height of the virtual viewpoint as a distance to the junction is shortened.

In a fifteenth aspect according to the first aspect, the navigation device further comprises image edit means for superimposing another image on an image for which the display magnification is changed by the control means.

A sixteenth aspect is a navigation method comprising a taken image obtaining step to obtain an image which is taken by imaging means provided to a vehicle for taking an image of an area ahead of the vehicle; an information obtaining step to obtain a route leading to a destination which is set by a user, position information of a junction on the route, and a current position of the vehicle; a distance calculation step to calculate a distance from the current position of the vehicle to a position of the junction; and a control step to change a display magnification for an image to be displayed on a screen based on the calculated distance.

In a seventeenth aspect according to the sixteenth aspect, at the control step, the display magnification is changed by enlarging at least a region of the image obtained at the taken image obtaining step to a predetermined display size according to the calculated distance.

In an eighteenth aspect according to the sixteenth aspect, at the control step, the display magnification of the image to be displayed on the screen is changed by changing an imaging magnification of the imaging means according to the calculated distance.

A nineteenth aspect is a vehicle comprising a vehicle body for accommodating imaging for taking an image of an anterior view in a traveling direction to be provided thereto; and a navigation device for displaying on a screen an image taken by the imaging means, the navigation device comprising route search means for searching for a route leading to a destination which is set by a user; junction information obtaining means for obtaining position information of a junction on the searched route; position information detection means for obtaining a current position of the vehicle body; distance calculation means for calculating a distance from the current position of the vehicle body to a position of the junction; and control means for changing a display magnification for an image to be displayed on the screen according to the calculated distance.

In a twentieth aspect according to the nineteenth aspect, the imaging means is provided in a compartment of the vehicle.

In a twenty-first aspect according to the nineteenth aspect, the imaging means is provided outside a compartment of the vehicle.

### EFFECT OF THE INVENTION

According to the above first aspect, an image of the junction can be displayed with a size (a display magnification), with which it is easy for the user to see the image, according to the distance between the junction and the vehicle. Thus, an image of the vicinity of the junction, which is required for the user, is displayed in a form which provides easy understanding, thereby enabling the user to drive safely.

According to the second aspect, since a part of the taken image is enlarged and displayed, an image which facilitates understanding of a state of the junction can be offered to the user.

According to the third aspect, during a period when the vehicle approaches the junction, an image of the junction with the substantially same area can be offered. Thus, an image of the junction which constantly provides easy understanding can be offered.

According to the fourth and fifth aspects, when the vehicle approaches close to the junction, an image in the branch direction can be shown in advance to the user to draw the user's attention. Thus, the user can drive with attention paid to road state, and the like after right turn or left turn.

According to the sixth aspect, an image with an appropriate size according to the road width at the junction can be offered. Thus, an image which facilitates user's understanding of a state of the junction can be offered.

According to the seventh aspect, since an image of the junction is zoomed and taken, a clear image of the junction can be offered. This makes it easier for user to understand a state of the junction.

According to the eighth to eleventh aspects, the same advantageous effects as those of the third to sixth aspects can be obtained.

According to the twelfth aspect, image recognition is performed with respect to a person such as a pedestrian, and the like, and the imaging direction of the imaging means can be changed so that the person is caught. Thus, the presence of the pedestrian can be notified to the user, with the result that it is possible for the user to drive more safely.

According to the thirteenth and fourteenth aspects, since an image of the vicinity of the junction from a high view point canbe offered, information about the vicinity of the junction can be offered in a form which provides easier understanding.

According to the fifteenth aspect, editing such as superimposing an arrow image on an image after change of the display magnification, and the like can be performed, and navigation can be performed to the user in a clearer form.

According to the navigation method of the sixteenth aspect, the same advantageous effects as those of the above first, second, and seventh aspects can be obtained.

According to the nineteenth aspect, the same advantageous effects as those of the above first aspect can be obtained.

According to the twentieth aspect, since the imaging means is provided in the compartment, the imaging means can be prevented from getting dirty and being stolen.

According to the twenty-first aspect, since the imaging means is provided outside the compartment, an image of a viewoutside the vehicle can be taken with a wide area which is not obstructed by an obstacle in comparison to the case where the imaging means is provided in the compartment. As a result, it is possible to collect and offer more information to the user.

### BRIEF DESCRIPTION OF THE DRAWINGS

[FIG. 1] FIG. 1 is a block diagram of a navigation device according to an embodiment of the present invention.
[FIG. 2] FIG. 2 illustrates an image taken by a camera at a point 300m before an intersection point.
[FIG. 3] FIG. 3 illustrates an image taken by the camera at a point 100m before the intersection point.
[FIG. 4] FIG. 4 illustrates an image taken by the camera at a point 50m before the intersection point.
[FIG. 5] FIG. 5 shows an example of a data structure of a navigation timing master 50.
[FIG. 6] FIG. 6 shows an example of a data structure of an initial display region table 60.
[FIG. 7] FIG. 7 illustrates the intersection point.
[FIG. 8] FIG. 8 shows an example of a data structure of a change rate master 80.
[FIG. 9] FIG. 9 is a graph showing an example of a change amount of a zoom magnification.
[FIG. 10] FIG. 10 shows an intersection point imaging possible region.
[FIG. 11] FIG. 11 is a flow chart showing in detail navigation processing according to the embodiment.
[FIG. 12] FIG. 12 is a flow chart showing in detail imaging regulation setting processing shown at step S103 in FIG. 11.
[FIG. 13] FIG. 13 illustrates a state in which a display target region is shifted to a traveling direction.
[FIG. 14] FIG. 14 illustrates a state in which the display target region is shifted in an up-down direction.
[FIG. 15] FIG. 15 is a view for explaining viewpoint conversion.
[FIG. 16] FIG. 16 illustrates an effect of viewpoint conversion at the 50m point.
[FIG. 17] FIG. 17 is a flow chart showing navigation processing executed by a navigation device according to a second embodiment.
[FIG. 18] FIG. 18 illustrates an image of a junction according to the second embodiment.
[FIG. 19] FIG. 19 illustrates an image of the junction according to the second embodiment.
[FIG. 20] FIG. 20 illustrates an image of the junction according to the second embodiment.

### DESCRIPTION OF THE REFERENCE CHARACTERS

- 101: input section
- 102: route search section
- 103: position information detection section
- 104: distance calculation section
- 105: map DB
- 106: imaging regulation storage section
- 107: imaging regulation setting section
- 108: control section
- 109: imaging section
- 110: display section

### BEST MODE FOR CARRYING OUT THE INVENTION

The following will describe embodiments with reference to the figures. It is noted that the present invention is not limited by the embodiments.

### (First embodiment)

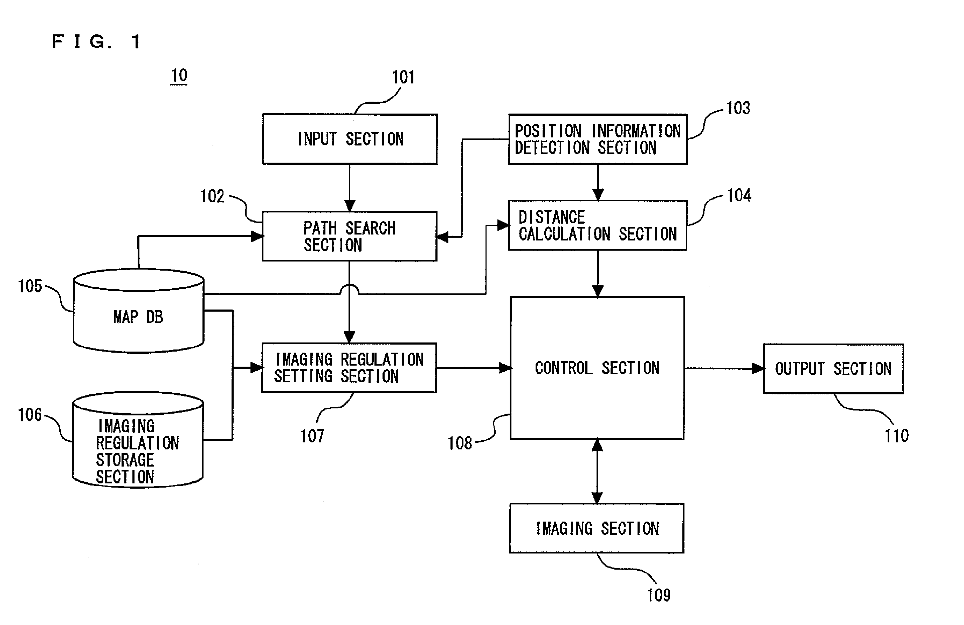

FIG. 1 is a block diagram of a navigation device (hereinafter, referred to as a navi device) according to a first embodiment of the present invention. As shown in FIG. 1, the navi device 10 includes an input section 101, a route search section 102, a position information detection section 103, a distance calculation section 104, a map DB 105, an imaging regulation storage section 106, an imaging regulation setting section 107, a control section 108, an imaging section 109, and a display section 110.

The input section 101 is means for inputting information concerning a destination to the navi device 10, and includes a remote control, a touch panel, a microphone for audio input, and the like.

The route search section 102 refers to the information concerning the destination which is inputted by the input section 101, vehicle position information which is detected by the position information detection section 103, and the map DB 105, and searches for a route leading to the destination.

The position information detection section 103 obtains information concerning the vehicle position which is measured by a positioning sensor as typified by a GPS (Global Positioning System) which is mounted to the vehicle.

The distance calculation section 104 refers to the vehicle position information which is detected by the position information detection section 103, and calculates a distance between the vehicle and a junction which the vehicle advances into first on a route after the current position of the vehicle among junctions (points where the vehicle is to turn right, left, and the like) on a route which is searched by the route search section 102.

The map DB 105 is means for storing map information required for navigating and searching for a route. For example, the map DB 105 is provided by an HDD or a DVD.

The imaging regulation storage section 106 stores data concerning a regulation (hereinafter, referred to as an imaging regulation) in taking an image of a junction with the imaging section 109. The data stored in the imaging regulation storage section 106 will be described in detail later.

The imaging regulation setting section 107 extracts junctions on the route which is searched for by the route search section 102. Then, with respect to each junction, the imaging regulation setting section 107 refers to information concerning the width of a road at the junction which is stored in the map DB 105, and sets the imaging regulation such as timing of a start and a termination of imaging, and the like. Also, the imaging regulation setting section 107 outputs the set imaging regulation to the control section 108.

The control section 108 controls the imaging section 109 based on the imaging regulation. Also, the control section 108 outputs to the display section 110 an image which is taken by the imaging section 109.

The imaging section 109 take an image of an area ahead of the vehicle. The imaging section 109 is achieved, for example, by a CCD (Charge Coupled Devices) camera, a CMOS (Complementary Metal Oxide Semiconductor) camera, or the like. The camera may be placed either inside or outside the vehicle, and preferably placed at a location adjacent to a room mirror if it is inside the vehicle and placed at a high location from a road surface such as the roof of a vehicle body if it is outside the vehicle. It is noted that in the present embodiment, for convenience of explanation, the position and the facing direction of the imaging section 109 are set in advance so that on the assumption that there is an intersection point as a junction 300m ahead, the intersection point is located at the center of a camera image.

The display section 110 displays the image which is taken by the imaging section 109. The display section 110 is achieved by a liquid crystal display, a head-up display, a projection device which projects an image on a windshield, or the like.

The following will describe an outline of navigation which is performed by the navi device 10 according to the present embodiment. First, a driver gets inside the vehicle, and inputs information of a destination to the navi device 10, so that the navi device searches for a route to the destination. After the route is searched for, the navi device 10 extracts junctions such as intersection point to turn right or left, an exit of an expressway, and the like which exist on the route, and set the above-described imaging regulation for each junction. In the present embodiment, the imaging regulation is set so that navigation is started from 300m before the junction, and terminated at the junction. Then, the driver starts driving. When the vehicle approaches a distance of 300m from the intersection point (hereinafter, referred to as a branch intersection point) as a junction, the imaging section 109 (hereinafter, referred to as a camera) starts taking an image of an area ahead of the vehicle. Along with this, the display section 110 displays a live-action image which is taken by the camera. At this time, the display section 110 displays an image region of the vicinity of the branch intersection point in an image taken by the camera, which is enlarged with digital zoom and on which an arrow indicating a traveling direction at the intersection point is superimposed. Then, as the vehicle approaches the branch intersection point, a region which is subject to the digital zoom is enlarged, andazoommagnificationis decreased. Inotherwords, the display section 110 always displays an image of the vicinity of the branch intersection point with the substantially same area.

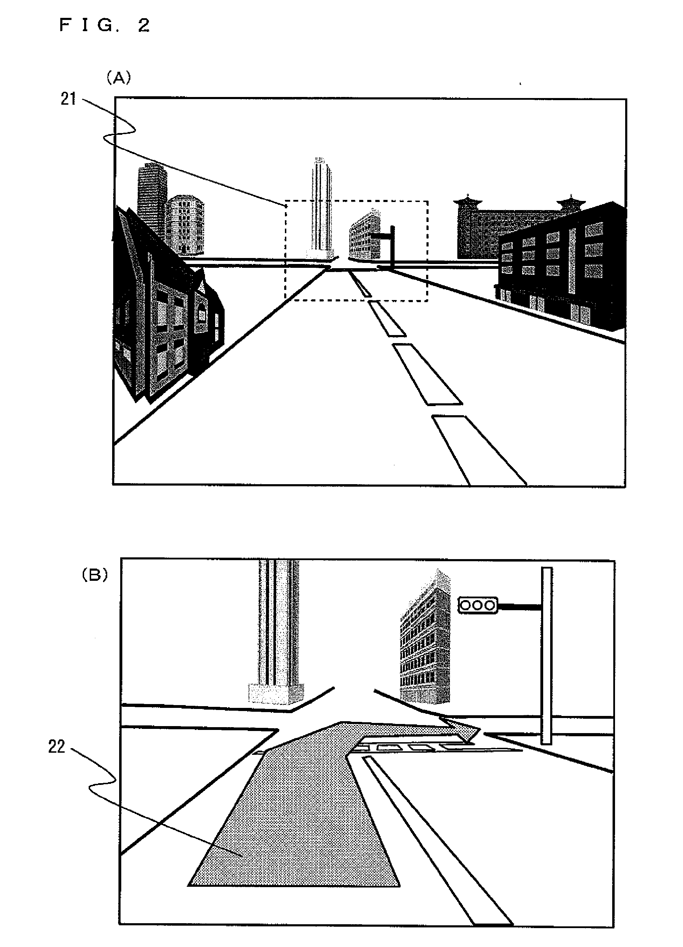

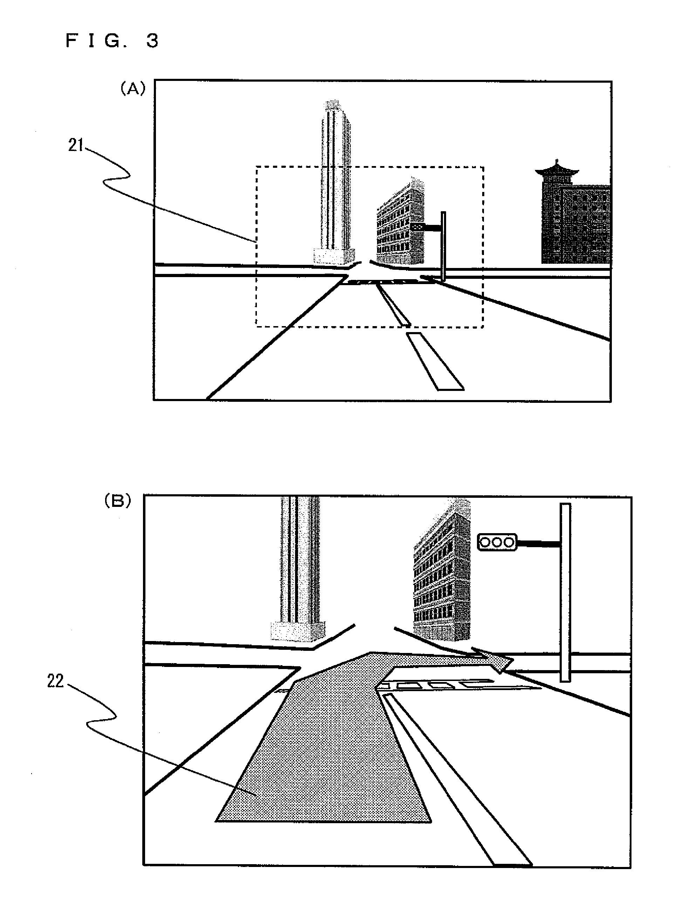

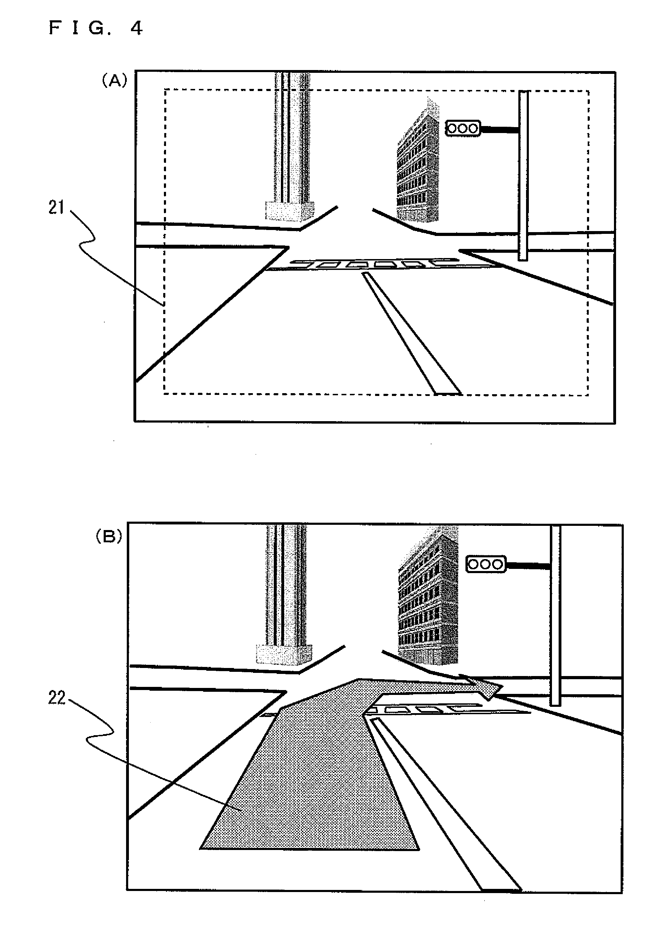

FIGS. 2 to 4 illustrate the outline of the navigation. FIG. 2 (A) illustrates an image taken by the camera at a point 300m before the branch intersection point. With respect to the image, the display section 110 displays an image as shown in FIG. 2 (B). In other words, a region 21 (hereinafter, referred to as a display target region) in the vicinity of the center of the camera image shown in FIG. 2(A) is digitally zoomed (ten times here) and displayed in the display section 110. FIG. 3 illustrates an image taken by the camera when the vehicle approaches a point 100m before the branch intersection point (FIG. 3 (A)), and an image displayed in the display section 110 (FIG. 3 (B)) . As shown in FIG. 3 (A), the camera image is an image which is closer to the branch intersection point than the image of the 300m-before point. With respect to the image, the display target region 21 becomes larger than at the 300m-before point with the zoom magnification decreased (seven times here), and displayed in the display section 110. As a result, as shown in FIG. 3(B), an image of the vicinity of the branch intersection point with the same area as at the 300m-before point is displayed as a navigation screen. FIG. 4 illustrates an image taken by the camera when the vehicle approaches a point 50m before the branch intersection point (FIG. 4(A)), and an image in the display section 110 (FIG. 4 (B)). In this state, the camera image is an image which is quite close to the branch intersection point. With respect to the image, the display target region 21 becomes larger than at the 100m-before point with the zoom magnification decreased further (two times here), and displayed in the display section 110. As a result, as shown in FIG. 4 (B), an image of the vicinity of the branch intersection point with the same area as at the 300m-before point and the 100m-before point is displayed in the display section 110. Then, when the vehicle passes through the branch intersection point, the navigation is terminated. As described above, the display target region (or a region to be digitally zoomed) in the camera image and the zoom magnification are appropriately changed according to the distance between the vehicle and the junction, and an image is displayed in a screen, thereby allowing an appropriate image of the vicinity of the intersection point to be always displayed to the driver.

The following will describe various tables which are required for executing navigation processing of the present embodiment. In the present embodiment, a navigation timing master 50, an initial display region table 60, and a change rate master 80 are used. The navigation timing master 50 and the change rate master 80 are created in advance, and stored in the imaging regulation storage section 106. On the other hand, the initial display region table 60 is produced by the imaging regulation setting section 107, and stored in a memory which is not shown. Then, the control section 108 refers to the initial, display region table 60 which is stored in the memory, and controls the imaging section 109.

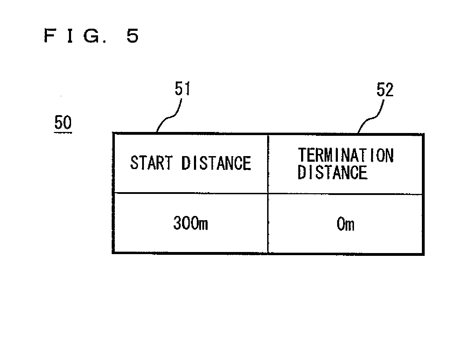

FIG. 5 shows an example of a data structure of the navigation timing master 50. The navigation timing master 50 is composed of a start distance 51 and a termination distance 52. The start distance and the termination distance show a period of navigating a course for the driver. When the vehicle approaches to the start distance with respect to the junction, navigation by showing an image is started, and when the vehicle reaches the termination distance with respect to the junction, the navigation is terminated. In the present embodiment, where the start distance is 300m and the termination distance is 0m, the explanation is provided below. It is noted that the start distance and the termination distance are not limited thereto, and for example, the navigation may be terminated at the point 50m before the branch intersection point.

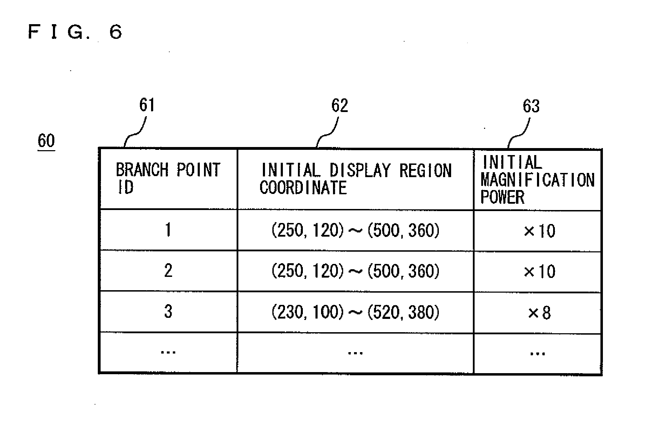

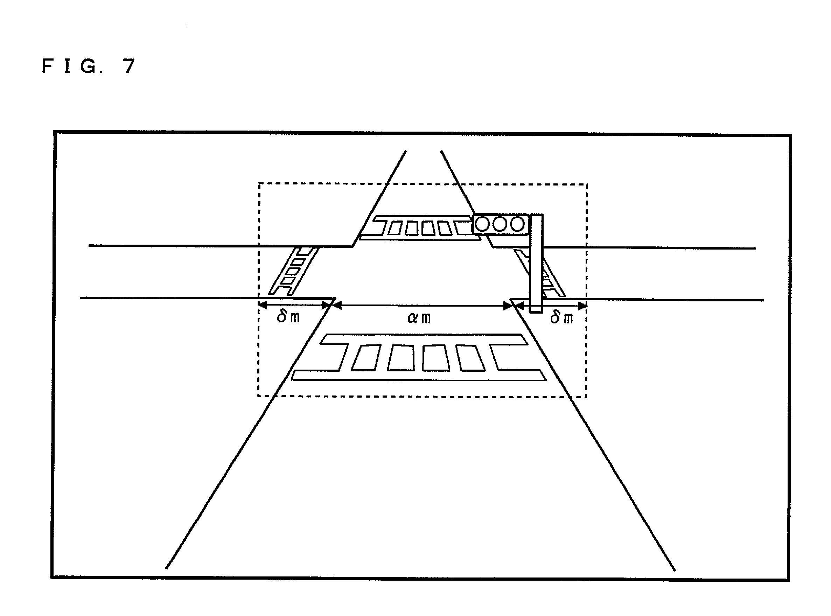

FIG. 6 shows an example of a data structure of the initial display region table 60. The initial display region table 60 is composed of a junction ID 61, an initial display region coordinate 62, and an initial magnification 63. The junction ID 61 is an ID for identifying each junction. The initial display region coordinate 62 indicates a display target region in a image taken by the imaging section 109 which is to be displayed in the display section 110 at the start of the navigation. The initial magnification 63 is a magnification of the digital zoom at the start of the navigation. Here, the initial display region will be described. The initial display region indicates an image region of an actual view to be displayed in the display section 110 in starting to show an image to the driver (at a point of time when the vehicle approaches to 30m before the branch intersection point in the above example). The initial display region will be described using FIG. 7. FIG. 7 illustrates the branch intersection point. As shown in FIG. 7, where a width of the branch intersection point is α m, a width of the initial display region in horizontal direction is set so that a region including at least δ m of each of left and right of the branch intersection point is displayed. In other words, a mounting location and an imaging magnification of the imaging section 109 are set in advance so as to be able to take an image of a wide area sufficient to include the region. Information concerning widths of branch intersection points is stored in the map DB 105. Thus, referring to the map DB 105, the initial display region is adaptively set for each branch intersection point. When the distance to the branch intersection point and the width of the imaging region in horizontal direction are determined, a size of the initial display region is determined uniquely. It is noted that the display target region including the initial display region is determined so that the center of the camera image coincides with the center of the display target region. However, it is not limited, and, for example, the display target region may be set so that a region at the point 50m before the branch intersection point is displayed. In other words, the display target region may be determined so that the center of the display target region is located below the center of the camera image. Also, in the case where the information concerning the widths of the branch intersection points is not stored in the map DB 105, the display target region may be determined using information concerning a number of lanes of a road and an estimate value of a lane width.

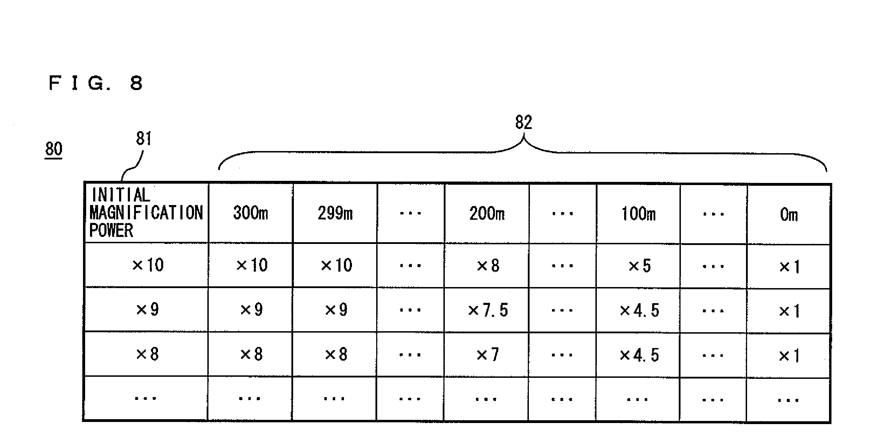

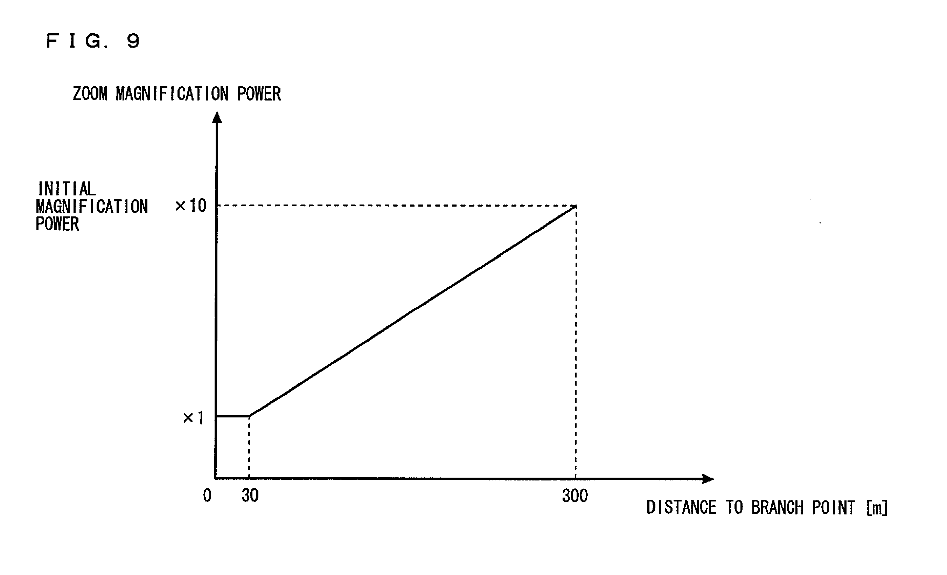

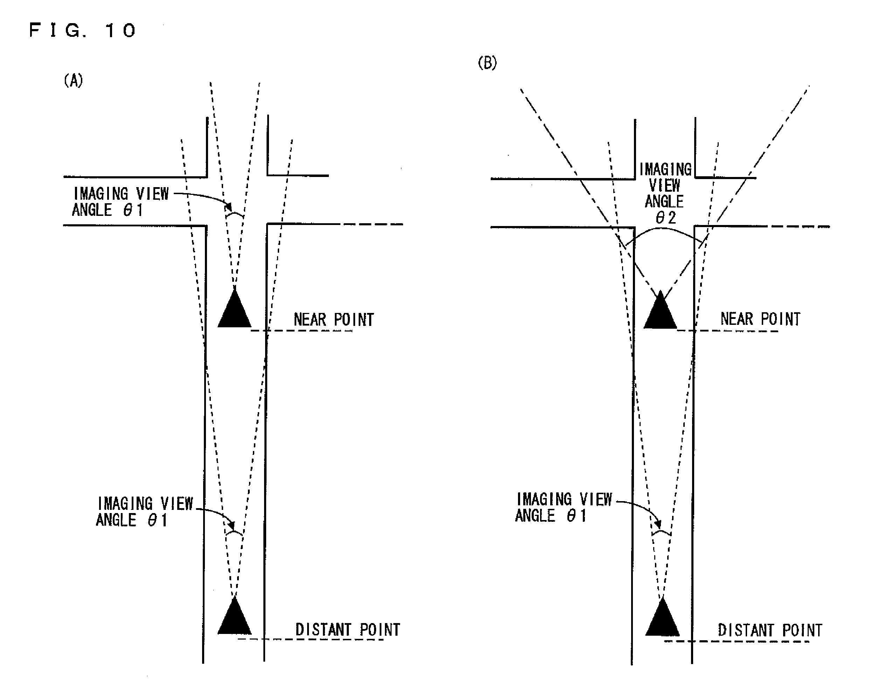

FIG. 8 shows an example of a data structure of the change rate master 80. The change rate master 80 is composed of an initial magnification 81 and an each-distance magnification 82 for each distance to the junction. The initial magnification 81 corresponds to the above initial magnification 63. The each-distance magnification 82 shows magnifications of the digital zoom to be performed on the display target region according to distances to the junction. Here, the change rate will be described. The change rate indicates a change amount of the magnification of the digital zoom which is performed on the display target region according to the distance between the vehicle and the junction. An example of a change of the magnification is shown in FIG. 9. FIG. 9 shows a regulation which in the case where a magnification of the digital zoom is 10.0 at a location (a distance of 300m to the junction) to start to show an image for navigating a route, decreases the magnification at a constant rate to one at a distance of 30 m to the junction. An effect by providing such a regulation will be described using FIG. 10. In the case where the magnification is a constant value regardless of a distance to the junction, when the imaging magnification is set so that the imaging target region includes the vicinity of the branch intersection point at a distant point (e.g. a distance of 300m to the junction) as shown in FIG. 10 (A), an image of the entire branch intersection point cannot be taken at a near point (e.g. a distance of 30m to the junction). On the other hand, when an imaging change rate is defined so that the imaging magnification is decreased (or an imaging view angle is increased) as the vehicle approaches the junction, it is possible to take an image of the entire branch intersection point at either a distant point or a near point as shown in FIG. 10(B), thereby offering a preferable image to the driver.

It is noted that the change rate is not limited to the above numeric value (one time at the distance of 30m), and may be optionally determined in view of various conditions such as performance and the mounting location of the camera, and the like. Also, a unit change amount may be not a constant value as shown in FIG. 9, and may be optionally determined so that a change amount is increased or decreased as the vehicle approaches the junction.

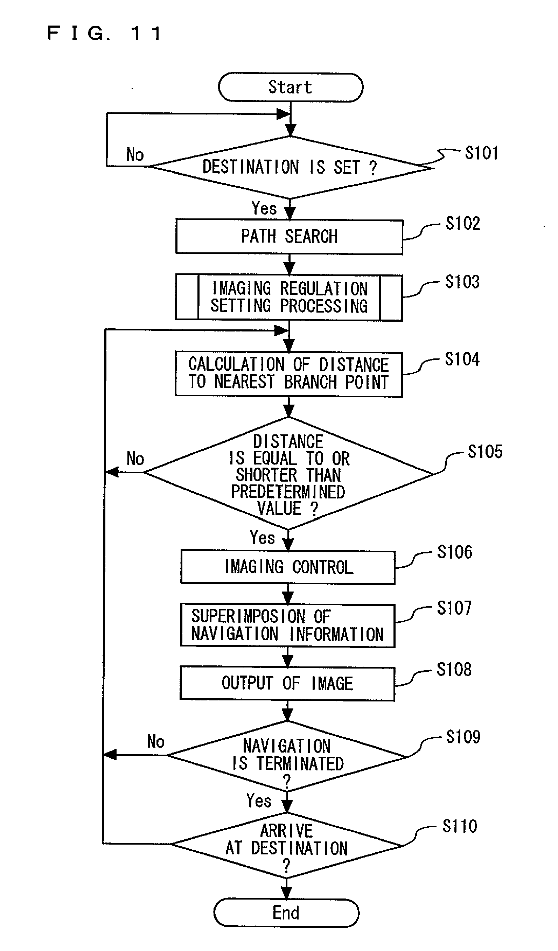

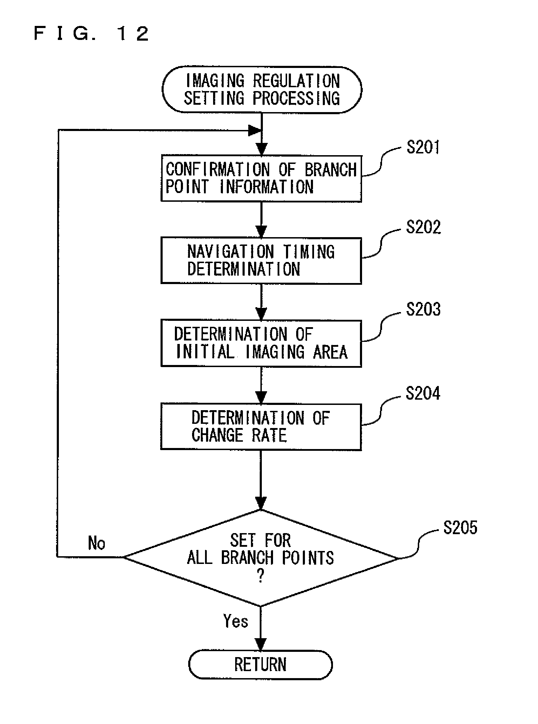

The following will describe a detailed operation of the navigation processing executed by the navi device 10 using FIGS. 11 and 12. FIG. 11 is a flow chart showing in detail the navigation processing according to the present embodiment. As shown in FIG. 11, the route search section 102 determines whether or not information of a destination is inputted by the driver through the input section 101 (step S101). As a result, when the information of the destination is not inputted (NO at the step S101), this determination is repeated until the information of the destination is inputted. On the other hand, when the information of the destination is inputted (YES at the step S101), the route search section 102 obtains the vehicle position information which is detected by the position information detection section 103, and searches for a route to the destination based on this information (step S102).

Next, the imaging regulation setting section 107 obtains information concerning junctions on the searched route from the map DB 105, refers to the imaging regulation storage section 106, and executes imaging regulation setting processing for setting an imaging regulation for each junction (step S103). FIG. 12 is a flow chart showing in detail the imaging regulation setting processing shown at the step S103. As shown in FIG. 12, the imaging regulation setting section 107 obtains information of the junctions which exist on the route searched at the step S102 in FIG. 11 (step S201) . This information includes at least position information of the junctions and data concerning the widths of roads at the junctions.

Next, the imaging regulation setting section 107 refers to the navigation timing master 50 from the imaging regulation storage section 106, and obtains the start distance 51 and the termination distance 52 (step S202). Here, for all the junctions, the start distance is 300m, and the termination distance is 0m. In other words, when the vehicle reaches 300m before the junction, a navigation image (hereinafter, referred to as a navi image) as described below is displayed in the display section 110, and when the vehicle reaches the junction, the display of the navi image is terminated.

Next, the imaging regulation setting section 107 sets an initial display region for each junction (step S203) . In other words, the above initial display region table 60 is generated. Describing the processing of the step S203 more specifically, the imaging regulation setting section 107 adds a predetermined margin to the road width of each junction which is obtained at the step S201, and determines a horizontal width of the initial display region. Next, the imaging regulation setting section 107 determines a certain width in vertical direction according to the horizontal width to determine the initial display region coordinate 62. Next, the imaging regulation setting section 107 sets, based on the horizontal width and the above start distance 51, the initial magnification 63 which is a magnification of the digital zoom in displaying the navi image. It is noted that the size of the display target region is designated in the camera image using a coordinate in pixel units.

Next, the imaging regulation setting section 107 sets the change rate (step S204). More specifically, the imaging regulation setting section 107 reads the each-distance magnification 82 from the change rate master 80 according to the initial magnification 63, and stores it in a memory so as to be associated with the targeted junction.

Next, it is determined whether or not the imaging regulations have been set for all the junctions on the route (step S205). When the imaging regulations have not been set for all the junctions (NO at the step S205), the imaging regulation setting section 107 returns to the step S201 to repeat the processing. On the other hand, when the imaging regulations have been set for all the junctions (YES at the step S205), the imaging regulation setting section 107 terminates the imaging regulation setting processing.

Returning to FIG. 11, after the processing of the step S103, the distance calculation section 104 calculates a distance between a position of the vehicle and the junction, and notifies a result of the calculation to the control section 108 (step S104) .

Subsequently, the control section 108 determines whether or not the distance calculated by the distance calculation section 104 is equal to or shorter than the start distance 51 which is set by the imaging regulation setting section 107 (or whether the vehicle enters within 300m before the junction) (step S105). As the result of the determination, when the calculated distance is not equal to or shorter than the start distance 51 (NO at the step S105), the control section 108 returns to the step S104 to repeat the processing. On the other hand, when the calculated distance is equal to or shorter than the start distance 51 (YES at the step S105), the control section 108 controls the imaging section 109 based on the imaging regulation which is set by the imaging regulation setting section 107 (step S106). More specifically, the control section 108 takes an image with the camera, and cuts out the above display target region. Then, the control section 108 generates an image into which the display target region is digitally zoomed based on the each-distance magnification 82 according to the calculated distance.

Next, the control section 108 generates an image on which an arrow image 22 (see FIG. 2(B) etc) indicating a traveling direction at the junction is superimposed (overlayed) (step S107). Describing the processing of the step S107 more specifically, the control section 108 calculates an angle, inclination, and a size of the arrow based on the distance to the junction, and the facing direction of the camera. Then, the control section 108 generates the arrow image 22 based on a result of the calculation. Finally, the control section 108 generates a navi image by superimposing the generated arrow image 22 on the digitally-zoomed image.

Next, the control section 108 outputs to the display section 110 the navi image generated at the step S107 (step S108) . In other words, the image as shown in FIG. 2(B) is displayed in the display section 110.

Next, the control section 108 determines whether or not the distance between the junction and the vehicle has reached the termination distance 5 2 (step S109). As a result, when the distance has not reached the termination distance 52 (NO at the step S109), the control section 108 returns to the step S104 to repeat the processing. On the other hand, when the distance has reached the termination distance 52 (YES at the step S109), the control with respect to the imaging section 109 and the image output to the display section 110 are terminated, and the processing proceeds to the next step S110.

At the step S110, the control section 108 determines whether or not the vehicle has reached the destination (step S110). As a result, when the vehicle has not reached the destination (NO at the step S110), the processing of the step S104 and the subsequent processing are repeated with respect to the remaining junctions until the vehicle reaches the destination. On the other hand, when the vehicle has reached the destination (YES at the step S110), the navigation processing is terminated.

As described above, in the first embodiment, in navigating a route using an image of a junction which is taken by the camera installed in the vehicle, an image of an actual view required for the driver is cut out from a camera image according to a distance to the junction, enlarged and shown. Thus, an image of the vicinity of the junction, which is required for the driver, is displayed in a form which provides easy understanding, thereby enabling the driver to drive safely.

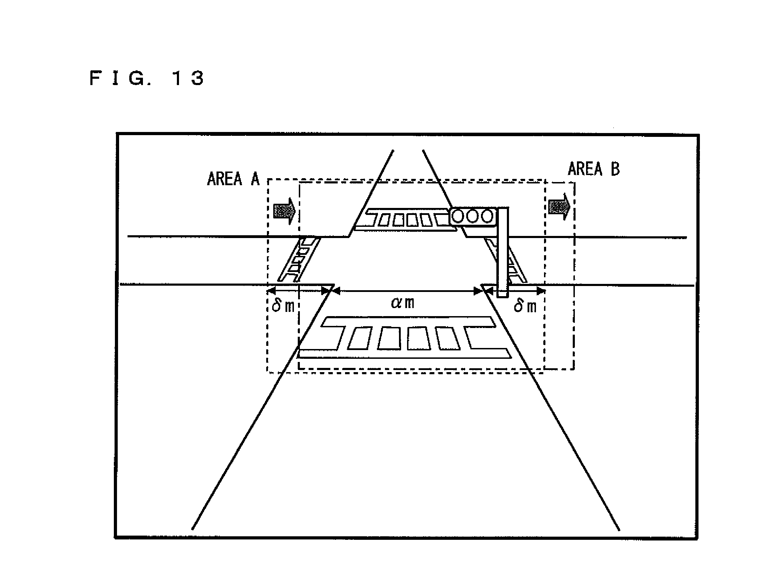

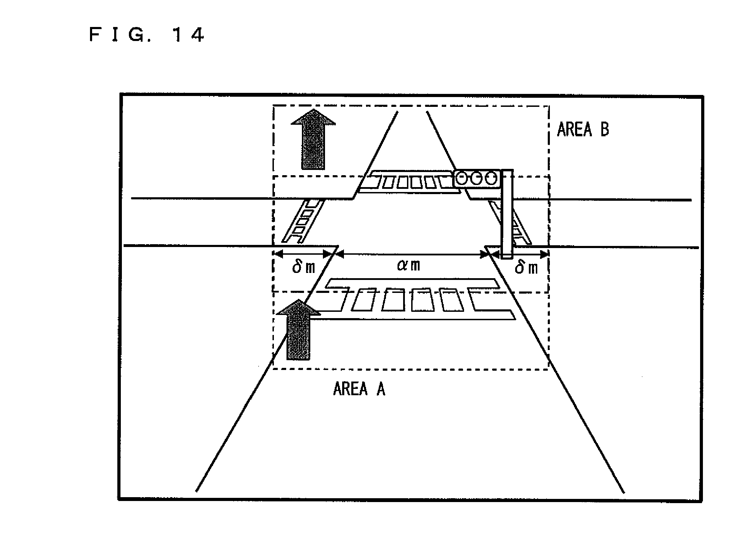

It is noted that although the center of the display target region coincides with the center of the camera image in the above embodiment, it is not limited, and the center of the display target region may be shifted, for example, toward a traveling direction (a branch direction) according to a distance to the junction. FIG. 13 illustrates a state in which the display target region is shifted to a traveling direction. As shown in FIG. 13, an area A shows a display target region at the point 300m before the branch intersection point. In the case where the course at the branch intersection point is to turn right, when the vehicle approaches close to the branch intersection point, the drive has to drive with attention paid to road state after right turn (for not contacting a pedestrian). Thus, it is preferable to show an image in a right turn direction in advance to the driver to draw driver' s attention. As the vehicle approaches the branch intersection point, the display target region may be shifted from the initial area A to an area B in the traveling direction of the vehicle. More specifically, in the above change rate master, a shift amount of the display target region (how many pixels it is shifted for) may be defined according to a distance to the junction. Or, a shift amount may be calculated based on a coordinate of the current position of the vehicle, a coordinate of the junction (a node), and the direction of the vehicle. At the step S106, after shifting the display target region to right or left according to the traveling direction at the junction and the above shift amount, the control section 108 may cut out the area, and may perform the digital zoom thereto. Also, in addition to such movement in a left-right direction, movement in the up-down direction as shown FIG. 14, or movement in the up-down and left-right directions maybe defined.

Further, the display target region may be changed, for example, according to an object such as a pedestrian, and the like in addition to the traveling direction. In this case, for example, the control section 108 is made to have an image recognition function. Then, a taken image is analyzed, and when a pedestrian is detected in the traveling direction, the display target region may be appropriately shifted so as to include the pedestrian. Thus, it becomes easier for the driver to look at the pedestrian, and the like, thereby allowing the driver to drive more safely.

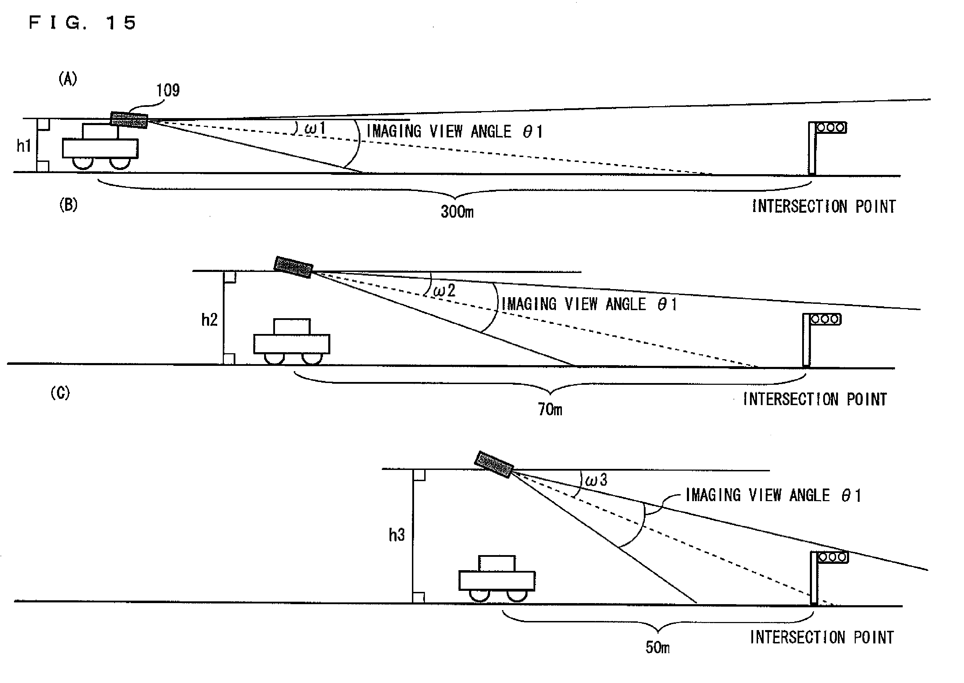

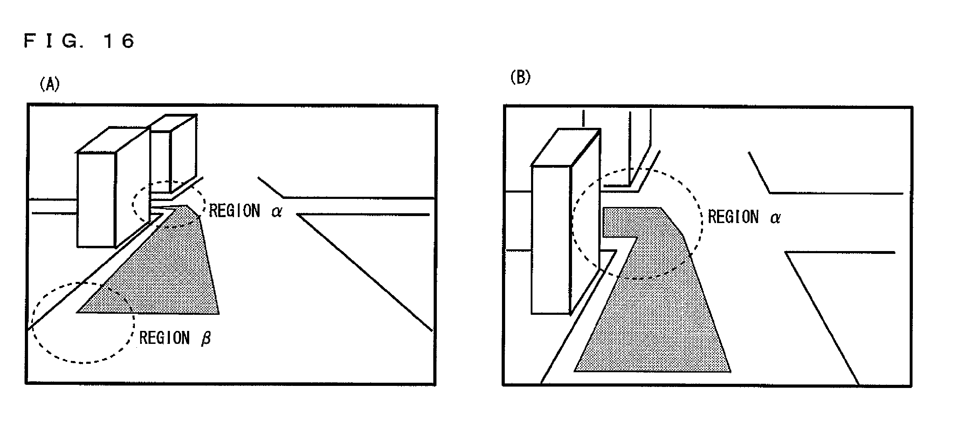

Also, with respect to an image taken as the vehicle approaches the junction, viewpoint conversion may be performed. The viewpoint conversion will be described using FIGS. 15 and 16. The viewpoint conversion is a technique to generate an image from a viewpoint (a virtual viewpoint) different from the actual viewpoint by performing coordinate conversion with respect to an actual image. In this case, a coordinate conversion table which stores a predetermined regulation for coordinate conversion is stored in the imaging regulation storage section 106. The control section 108 may perform the viewpoint conversion according to the regulation in the coordinate conversion table, and may display a resultant image on the display section 110. For example, in the coordinate conversion table is defined a regulation (a regulation for a virtual viewpoint 1) for converting to a viewpoint at a height h2 with a depression angle (a descending angle of a camera optical axis with respect to a plane parallel to the ground) ω2 of a camera optical axis as shown in FIG. 15(B), and a regulation (a regulation for a virtual viewpoint 2) for converting to a viewpoint at a height h3 with a depression angle ω3 as shown in FIG. 15 (C) . The coordinate conversion is performed with respect to a taken image, for example, using the regulation for the virtual viewpoint 2 at a position between 50m and 70m to the junction and the regulation for the virtual viewpoint 3 at a position within 50m to the junction, and a generated image is shown to the driver. More specifically, after the timing of the start of the navigation, the imaging regulation setting section 107 determines to perform the viewpoint conversion to the virtual viewpoint 1 with respect to an image when the position of the vehicle is at a point between 50m and 70m from the junction, and to perform the viewpoint conversion to the virtual viewpoint 2 with respect to an image when the position of the vehicle is within 50m from the junction. The control section 108 performs coordinate conversion processing with respect to an image taken by the imaging section 109 using the coordinate conversion table selected by the imaging regulation setting section 107 according to a distance between the vehicle and the junction which is calculated by the distance calculation section 104, and outputs a resultant image to the display section 110. Here, where a height and a depression angle of the imaging section 109 installed in the vehicle are denoted by h1 and ω1 (hereinafter, referred to as a camera viewpoint) as shown in FIG. 15 (A), relations of h1<h2<h3, and ω1<ω2<ω3 are satisfied. In other words, as the vehicle approaches the junction, the viewpoint conversion is performed with respect to an image from a higher viewpoint.

Here, algorism of the viewpoint conversion will be described. Algorism for converting an image taken from the camera viewpoint into an image viewed from the virtual viewpoint 2 is geometrically and uniquely determined by a camera parameter of the imaging section 109 at the camera viewpoint and a camera parameter at the virtual viewpoint 2. The following will describe the method. A first step is to determine a correspondence relation between a coordinate system of the ground obtained from the camera parameter at a virtual viewpoint and a coordinate system of a virtual image sensor surface at the virtual viewpoint. Thus, it is calculated which position on the coordinate system of the ground each pixel of the coordinate system of the virtual image sensor surface corresponds to. A second step is to determine a correspondence relation between a coordinate system of the ground at the virtual viewpoint 2 and a coordinate system of the ground obtained from the camera parameter of the imaging section 109. Thus, it is calculated which position on the coordinate system of the ground from the camera parameter of the imaging section 109 each coordinate of the coordinate system of the ground at the virtual viewpoint 2 corresponds to. A third step is to determine a correspondence relation between the coordinate system of the ground from the camera parameter of the imaging section 109 and a coordinate system of an image sensor surface from the camera parameter of the imaging section 109. Thus, it is calculated which position on the coordinate system of image sensor surface from the camera parameter of the imaging section 109 each coordinate of the coordinate system of the ground from the camera parameter of the imaging section 109 corresponds to. By performing such processing, the coordinate system of the image sensor surface of the imaging section 109 and the coordinate system of the virtual image sensor surface at the virtual viewpoint 2 are related to each other, and stored as a conversion table in the imaging regulation storage section 106. The above processing is possible for any virtual viewpoint a camera parameter for which is known.

FIG. 16 illustrates an effect of viewpoint conversion at the 50m point. FIG. 16(A) is a taken image from the camera viewpoint at this point, and FIG. 16 (B) is an image which has been treated by the coordinate conversion to the virtual viewpoint 2. When an image of the vicinity of the branch intersection point is converted into an image from a high viewpoint in the viewpoint conversion, a region β which is distant from the intersection point is out of the display target region but a region α in the vicinity of the branch intersection point is displayed more widely as shown in FIG. 16(B). Thus, the driver can easily understand a state in the vicinity of the branch intersection point.

As described above, the conversion of a viewpoint makes it possible to offer more useful information for the driver. This will be described in detail. When the vehicle approaches the junction, detailed information ("turn left after the convenience store", "turn left before the traffic light", and the like) is required for specifying a branch direction, and the like. Thus, information of a region such as the region β in FIG. 15 which is distant from the junction is not so important, and detailed information of the region α is more necessary. By performing the viewpoint conversion to a high viewpoint as the vehicle approaches the j unction, the region α can be displayed widely in detail. Thus, even an object which is hard to confirm in the region α in FIG. 16 (A) becomes easy to confirm in the region α in FIG. 16 (B), and a part of a superimposed navigation arrow which indicates a branch direction can be drawn with a wider width, thereby making it easy for the driver to determine the branch direction.

### (Second embodiment)

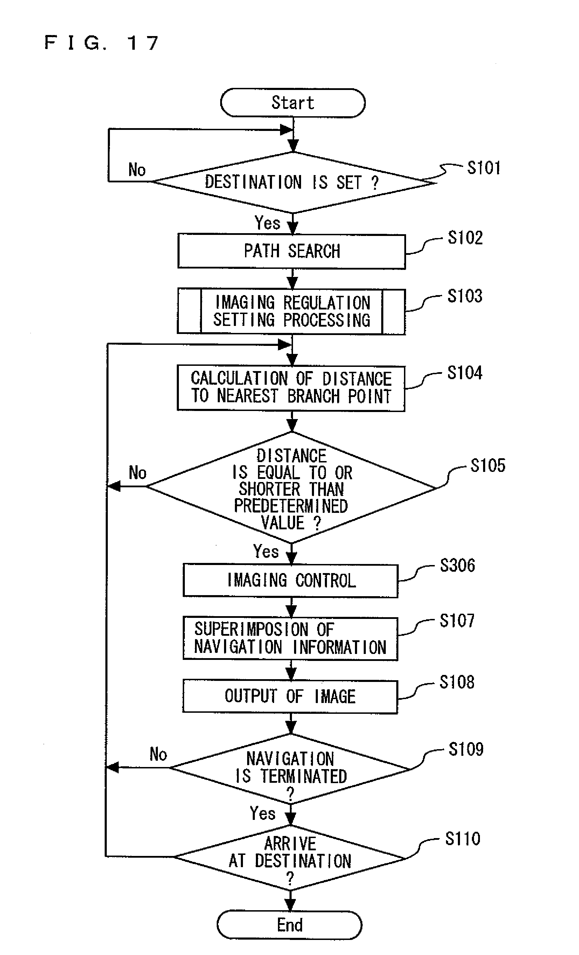

The following will describe a second embodiment of the present invention with reference to FIGS. 17 to 20. In the above first embodiment, a predetermined region is cut out from the camera image, digitally zoomed, and displayed. On the other hand, in the second embodiment, digital zoom is not used, but optical zoom is used. It is noted that a navi device according to the present embodiment is the same as that according to the above first embodiment except that the imaging section 109 includes first drive means (not shown) for driving a lens for the optical zoom and second drive means (not shown) for changing the facing direction of the imaging section 109, so that the same reference numerals are used and detailed description will be omitted.

The following will describe data used in the second embodiment. The data used in the present embodiment is basically the same as that in the first embodiment but different from that in the first embodiment in that the each-distance magnification 82 of the change rate master 80 described using FIG. 8 indicates a magnification of the optical zoom of the imaging section 109. Also, the initial magnification 63 of the initial display region table 60 indicates the magnification of the optical zoom. In other words, amagnificationof the optical zoomat the start of navigation is set according to a road width of each junction.

The following will describe navigation processing according to the second embodiment of the present invention using FIGS. 17 to 20. FIG. 17 is a flow chart showing the navigation processing executed by the navi device according to the second embodiment. The navigation processing executed in the second embodiment is basically the same as the navigation processing in the first embodiment described using FIG. 10 except step S306. Thus, the detailed description of the common processing will be omitted.

As shown in FIG. 17, next to the processing of the step S105, the control section 108 performs imaging control (the step S306). In the imaging control (the step S106) in the first embodiment, the control section 108 takes an image with the camera, and cuts out the display target region from the image. On the other hand, in the processing of the imaging control in the present embodiment, the control section 108 changes a magnification of the camera according to the each-distance magnification 82 of the change rate master 80, that is, the control section 108 takes an anterior image while performing the optical zoom. In other words, the imaging magnification of the camera is changed according to a distance, thereby displaying a view of the substantially same area even at any distance. Then, at the step S107, the control section 108 superimposes the arrow image 22 on the taken image, and outputs the generated navi image at the step S108.

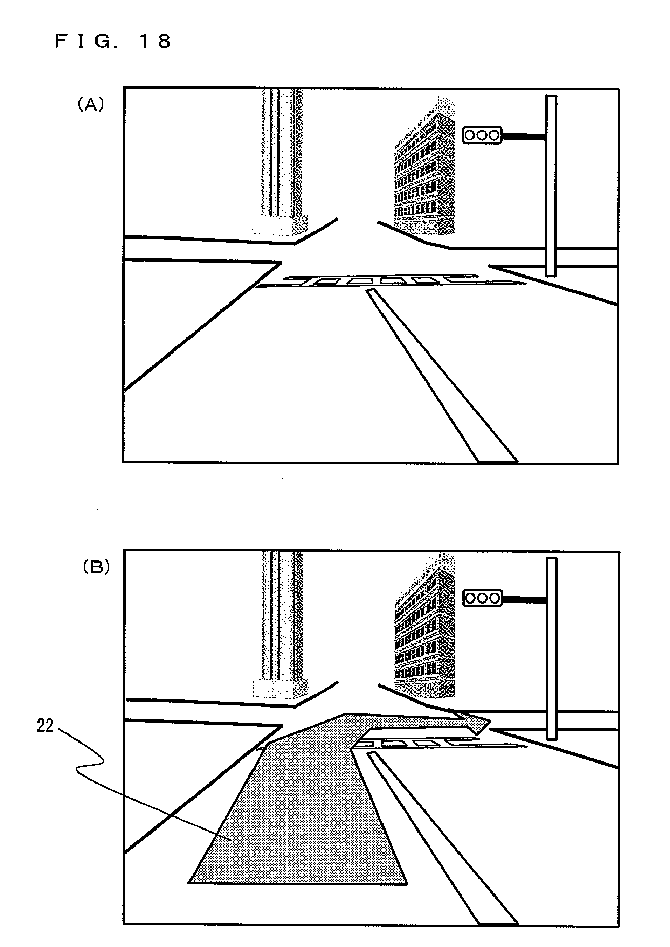

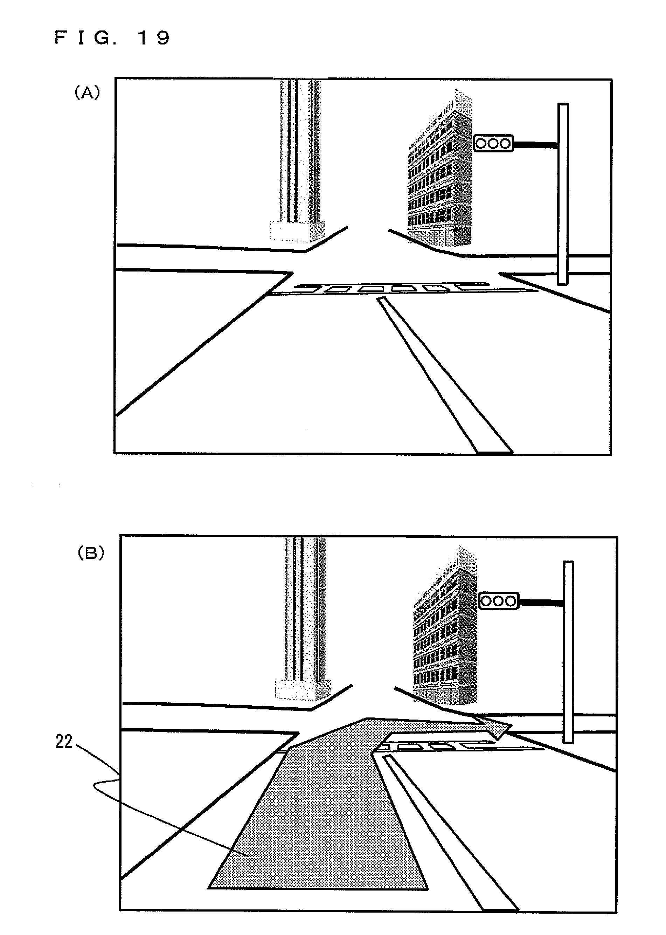

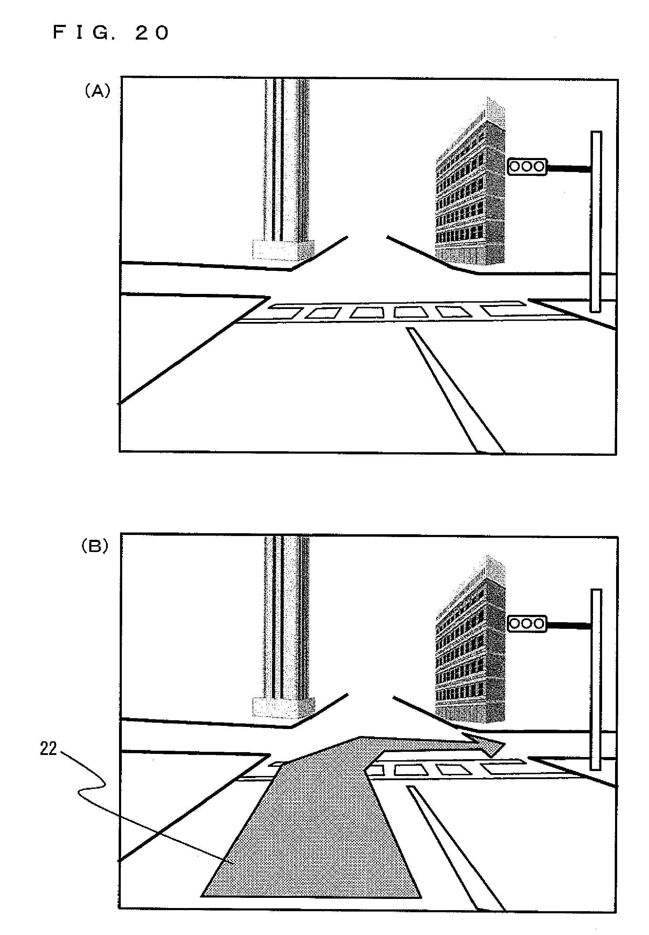

Using FIGS. 18 to 20, the processing of the step S306 will be described supplementally. FIG. 18 (A) illustrates a camera image at 300m before a branch intersection point. Also, FIG. 18 (B) illustrates an image displayed in the display section 110 at this time. The initial magnification is ten times at this time. As a result, since the camera image itself is an image in which the vicinity of the branch intersection point is zoomed in, the arrow image 22 is superimposed directly on the image to generate a navi image (FIG. 18 (B)). FIG. 19 illustrates an image at 100m before the branch intersection point. At this time, the imaging magnification is five times. The arrow image 22 is superimposed on the image (FIG. 19 (A)) to generate a navi image (FIG. 19 (B)). FIG. 20 illustrates an image at 50m before the branch intersection point. At this time, the imaging magnification is two times. The arrow image 22 is superimposed on the image (FIG. 20 (A)) to generate a navi image (FIG. 20(B)).

As described above, by changing imaging magnification according to a distance, a camera image (or, an image of the substantially same area) in which the vicinity of the branch intersection point is enlarged can be taken. Thus, the arrow image 22 is only superimposed on the image to generate a navi image. Also, a zoomed-in image is directly outputted. Thus, a clear image can be offered as compared to the case where an image is digitally zoomed and outputted.

It is noted that at the step S306, the control section 108 may change the facing direction (the imaging direction) of the camera to a branch direction of the vehicle according to a distance to the junction. This is because of the same reason as that for shifting the display target region according to the traveling direction of the vehicle in the first embodiment as described using FIG. 12.

Further, the optical zoom and the digital zoom described in the first embodiment may be combined. For example, a predetermined display target region is cut out from an image taken with optical zoom of five times, digitally zoomed in two times, and displayed. Thus, while a cost for installing a high power optical zoom mechanism is suppressed, a clear image can be offered as compared to the case of using only digital zoom.

Also, the distance calculation section 104, the imaging regulation setting section 107, and the control section 108 in FIG. 1 may be included in the imaging section 109. For example, the information concerningnavigation from the route search section 102 and the distance calculation section 104 is outputted to a camera unit (the imaging section 109) provided independently of the navi device. Then, in the camera unit, an image to be shown to the driver is generated by setting the above imaging regulation, controlling the imaging magnification, and editing an image, and the like. And then, the generated image is outputted to the navi device, and the navi device may display the image. Also, the distance calculation section 104, the imaging regulation setting section 107, and the control section 108 in FIG. 1 may be included in an external unit (e.g. a camera control unit) provided independently of the navi device and the camera. In this case, the external unit may receive route information and position information from the navi device, set the above imaging regulation, and output to the camera a signal for controlling the camera. In addition, the external unit may receive an image from the camera, perform processing such as the above digital zoom, superimposing the arrow, and the like, and output a processed image to the navi device.

Also, each embodiment described above may be offered in a form of a program which is executed by a computer. In this case, a navigation program stored in the imaging regulation storage section 106 may be read, and the control section 108 may execute the processing as shown in FIGS. 11 and 12. Also, each embodiment may be offered in a form of a movable body such as a vehicle, and the like which is equipped with the above navigation device.

### INDUSTRIAL APPLICABILITY

A navigation device, a method, and a vehicle according to the present invention can change an image to be displayed for navigation according to a distance between a junction and the vehicle, is useful for a car navigation device installed in the vehicle, an image display device such as a display, and the like, an in-vehicle information terminal, a camera unit, a control unit for camera control, and the like.

## Claims

1. A navigation device which is installed in a vehicle for displaying on a screen an image which is taken by imaging means for taking an image of an area ahead of the vehicle, the navigation device comprising:
route search means for searching for a route leading to a destination which is set by a user;
junction information obtaining means for obtaining position information of a junction on the searched route;
position information detection means for obtaining a current position of the vehicle;
distance calculation means for calculating a distance from the current position of the vehicle to a position of the junction; and
control means for changing a display magnification for an image to be displayed on the screen according to the calculated distance.

2. The navigation device according to claim 1, wherein the control means changes the display magnification by enlarging at least a region of an image taken by the imaging means to a predetermined display size according to the calculated distance.

3. The navigation device according to claim 2, wherein the control means increases a size of the region to be enlarged as the calculated distance is shortened, and changes the display magnification by enlarging the region to the predetermined display size.

4. The navigation device according to claim 2, wherein the control means further moves a position of the region to be enlarged which is set with respect to the image taken by the imaging means in a direction corresponding to a branch direction of the vehicle at the junction, and changes the display magnification by enlarging the region to the predetermined display size.

5. The navigation device according to claim 4, wherein the control means changes a displacement amount of the position of the region to be enlarged which is set with respect to the image taken by the imaging means according to the calculated distance.

6. The navigation device according to claim 2, further comprising:
imaging regulation setting means for setting an imaging regulation of the imaging means, which includes at least a regulation for timing of a start and a termination of imaging for each junction and a regulation for a size of the region to be enlarged at a time of the start of imaging for each junction; and
road width information obtaining means for obtaining a width of a road at the junction,
wherein the control means determines a size of the region to be enlarged at the time of the start of imaging based on a road width at each junction and the imaging regulation for each junction.

7. The navigation device according to claim 1, wherein the control means changes the display magnification for the image to be displayed on the screen by changing an imaging magnification of the imaging means according to the calculated distance.

8. The navigation device according to claim 7, wherein the control means changes the display magnification by decreasing the imaging magnification of the imaging means as the calculated distance is shortened.

9. The navigation device according to claim 7, wherein the control means further changes an imaging direction of the imaging means to a branch direction of the vehicle at the junction, and changes the imaging magnification.

10. The navigation device according to claim 9, wherein the control means changes an angle, based on which the imaging direction of the imaging means is changed, according to the calculated distance.

11. The navigation device according to claim 7, further comprising:
imaging regulation setting means for setting an imaging regulation of the imaging means, which includes at least a regulation for timing of a start and a termination of imaging for each junction and a regulation for an imaging magnification of the imaging means at a time of the start of imaging for each junction; and
road width information obtaining means for obtaining a width of a road at the junction,
wherein the control means sets the imaging magnification at the time of the start of imaging based on a road width at each junction and the imaging regulation for each junction.

12. The navigation device according to claim 7, further comprising recognition means for detecting a person by performing image recognition with respect to the image taken by the imaging means,
wherein the control means changes the imaging magnification after changing an imaging direction of the imaging means according to a position of the detected person.

13. The navigation device according to claim 1, further comprising virtual viewpoint conversion means for performing viewpoint conversion from an image for which the display magnification is changed into an image which is viewed from a virtual viewpoint.

14. The navigation device according to claim 13, wherein the virtual viewpoint conversion means relatively increases a height of the virtual viewpoint as a distance to the junction is shortened.

15. The navigation device according to claim 1, further comprising image edit means for superimposing another image on an image for which the display magnification is changed by the control means.

16. A navigation method comprising:
a taken image obtaining step of obtaining an image which is taken by imaging means provided to a vehicle for taking an image of an area ahead of the vehicle;
an information obtaining step of obtaining a route leading to a destination which is set by a user, position information of a junction on the route, and a current position of the vehicle;
a distance calculation step of calculating a distance from the current position of the vehicle to a position of the junction; and
a control step of changing a display magnification for an image to be displayedona screenbasedonthe calculated distance.

17. The navigation method according to claim 16, wherein at the control step, the display magnification is changed by enlarging at least a region of the image obtained at the taken image obtaining step to a predetermined display size according to the calculated distance.

18. The navigation method according to claim 16, wherein at the control step, the display magnification for the image to be displayed on the screen is changed by changing an imaging magnification of the imaging means according to the calculated distance.

19. A vehicle comprising:
a vehicle body for accommodating imaging means for taking an image of an anterior view in a traveling direction; and
a navigation device for displaying on a screen an image taken by the imaging means, the navigation device comprising:
route search means for searching for a route leading to a destination which is set by a user;
junction information obtaining means for obtaining position information of a junction on the searched route;
position information detection means for obtaining a current position of the vehicle body;
distance calculation means for calculating a distance from the current position of the vehicle body to a position of the junction; and
control means for changing a display magnification for an image tobe displayed on the screen according to the calculated distance.

20. The vehicle according to claim 19, wherein the imaging means is provided in a compartment of the vehicle.

21. The vehicle according to claim 19, wherein the imaging means is provided outside a compartment of the vehicle.
